# EUROPÄISCHE PATENTSCHRIFT

(11) **EP 2 466 154 B1**
(45) Veröffentlichungstag und Bekanntmachung des Hinweises auf die Patenterteilung: **17.04.2013**
(21) Anmeldenummer: 10195696.9
(22) Anmeldetag: 17.12.2010
(51) Int. Cl.: F15B 11/00

(54) **Elektrohydraulische Steuervorrichtung**
Electrohydraulic control device
Dispositif de commande hydroélectrique

(43) Veröffentlichungstag der Anmeldung: 20.06.2012
(73) Patentinhaber: HAWE Hydraulik SE, 81673 München (DE)
(72) Erfinder: Macit, Recep, Dr., 81673 München (DE)
(74) Vertreter: Grünecker, Kinkeldey, Stockmair & Schwanhäusser

(56) Entgegenhaltungen:
- EP-A1- 2 157 319
- EP-A2- 2 031 256
- US-A1- 2008 072 749

## Beschreibung

Die Erfindung betrifft eine elektrohydraulische Steuervorrichtung gemäß Oberbegriff des Patentanspruchs 1.

Bei solchen hydropneumatischen Achsfederungen für Arbeitsmaschinen (z.B. Prospekt HYDAC "Systeme / Komponenten für Landmaschinen", DEF 10.105.1.0/05.08; Seiten 1 bis 7, der Fa. HYDAC INTERNATIONAL, 66280 Sulzbach/Saar, DE (www.hydac.com)) werden abhängig von jeweils erforderlichen Federungsfunktionen in der Steuervorrichtung unterschiedlich gestaltete Ventilanordnungen verwendet. Dies bedeutet einen erhöhten Kostenaufwand, da die Ventilanordnung abhängig von den benötigten Federungsfunktionen aus einer sehr großen Vielzahl unterschiedlichster Komponenten jeweils maßgeschneidert zusammengesetzt wird. Ein weiterer Nachteil dieses Konzeptes besteht darin, dass es kaum möglich ist, die Ventilanordnung in ein CAN-Bussystem mit einem Zentralrechner einzugliedern, u.a. wegen einer Vielzahl zu betätigender und/oder überwachender Schaltmagneten in Proportional- oder Schwarz/Weiß-Auslegung. Diese bekannten elektrohydraulischen Steuervorrichtungen von Achsfederungen verwenden deshalb häufig mehrere, verschiedene Recheneinheiten, was den Aufwand unzweckmäßig erhöht.

Bei der gattungsgemäßen elektrohydraulischen Steuervorrichtung in EP 2 031 256 A ist der Dreistellungswegeschieber mit einer vierten Schaltstellung ausgebildet, was einen baulich und steuerungstechnisch hohen Aufwand bedingt.

Der Erfindung liegt die Aufgabe zugrunde, eine elektrohydraulische Steuervorrichtung der eingangs genannten Art anzugeben, die baulich und steuerungstechnisch einfach, bevorzugt CANbusfähig ist, und mit einer Grundausstattung an hydraulischen und elektrischen Komponenten universell für verschiedene Federungsfunktionen von Arbeitsmaschinen einsetzbar ist.

Die gestellte Aufgabe wird mit den Merkmalen des Patentanspruchs 1 gelöst.

Die erfindungsgemäße Steuervorrichtung lässt mit der Ventilanordnung Federungsfunktionen für Vorder- und/oder Hinterachsfederungen, wie die Aktivierung oder Passivierung der Achsfederung, ein Heben und Senken des Maschinenaufbaus, eine härtere oder weichere Dämpfung, einen Hangausgleich oder einen Wankausgleich, eine Niveauregulierung, eine Nivellierung, eine Entlastung bei Verwendung von Anbaugeräten, und dgl., universell steuern, und ist für praktisch alle gängigen Bauarten von Vorderachsfederungen oder Hinterachsfederungen angetriebener oder nicht angetriebener Achsen von Baumaschinen brauchbar. Durch die universelle Einsetzbarkeit der elektrohydraulischen Steuervorrichtung mit stets gleichen Ausstattungskomponenten lassen sich Kosten einsparen. Die beiden Arbeitsstrom-2/2-Druckregelsitzventile sind in ihren Absperrstellungen leckagefrei dicht, so dass die bauartbedingte Leckage im Dreistellungswegeschieber keinen nachteiligen Einfluss gewinnt. Dabei lassen sich die beiden Arbeitsstrom-2/2-Druckregelsitzventile gemeinsam und druckregelnd aufsteuern, wenn über den Dreistellungswegeschieber bestimmte Federungsfunktionen zu steuern sind. Das Steuerstrom-2/2-Druckregelsitzventil ermöglicht es hingegen, wahlweise nur ein Arbeitsstrom-2/2-Druckregelsitzventil aufzusteuern, wie es für beispielsweise eine weitere Federungsfunktionen erforderlich ist. Solche Druckregelsitzventile sind auf anderen Gebieten wie der Mobilhydraulik, in Flurförderfahrzeugen oder Werkzeugmaschinen üblich und kostengünstig verfügbar. Der Dreistellungswegeschieber ist von bewährter Bauweise und kostengünstig verfügbar, da er in weiteren Gebieten der Technik, beispielsweise der Kranhydraulik, häufig eingesetzt wird. Modernen Anforderungen entsprechend ist die Steuervorrichtung schließlich für CAN-Bussysteme geeignet.

Bei einer zweckmäßigen Ausführungsform ist das Umschaltventil ein Magnetventil mit einem Schwarz/Weiß-Magneten, obwohl nicht ausgeschlossen ist, das Umschaltventil als druckvorgesteuertes Ventil auszubilden und entsprechend zu verschalten. Im letztgenannten Fall weist die Steuervorrichtung im Wesentlichen nur die beiden Proportionalmagneten der Proportionaldruckvorsteuerungen des Dreistellungswegeschiebers als elektrisch zu betätigende Komponenten auf. Die von dem Umschaltventil bei dessen Betätigung beispielsweise gesteuerte Federungsfunktion kann eine Hebefunktion der Hydrozylinder sein.

Bei einer baulich und steuerungstechnisch zweckmäßigen Ausführungsform weist der Dreistellungswegeschieber Steuerdruckanzapfungen für die aus der Steuerdruckversorgung abgeleiteten, in den Proportionaldruckvorsteuerungen proportional eingestellten tatsächlichen Schieberbetätigungs-Steuerdrücke auf, und ist jede Steuerdruckanzapfung mit einem Eingang des Umschaltventils verbunden. Auf diese Weise lassen sich die beiden Arbeitsstrom-2/2-Druckregelsitzventile sehr einfach über die Proportionaldruckvorsteuerungen proportional gemeinsam und gleichzeitig aufsteuern, d.h., ohne eine zusätzliche Ventilanordnung für diese Funktion.

Um wahlweise entweder beide Steuerstrom-2/2-Druckregelsitzventile gemeinsam oder nur eines davon aufsteuern zu können, ist bei einer zweckmäßigen Ausführungsform zwischen dem mit der Aufsteuerseite nur des einen Arbeitsstrom-2/2-Druckregelsitzventils verbundenen Steuerstrom-2/2-Druckregelsitzventil und dem mit den Aufsteuerseiten beider Arbeitsstrom-2/2-Druckregelsitzventile verbundenen Ausgängen des Umschaltventils ein Wechselventil angeordnet, das rein druckabhängig anspricht, d.h. zur Betätigung keiner elektrisch anzusteuernden Komponente bedarf.

Im Hinblick auf das gewünschte Federungs- und/oder Dämpfungsverhalten der Achsfederung ist bei einer zweckmäßigen Ausführungsform jede Arbeitsleitung zwischen dem Hydrozylinder und einem Arbeitsstrom-2/2-Druckregelsitzventil an einen Gasdruckspeicher, z.B. mit zugeordnetem Drucksensor, angeschlossen. In einfachen Ausführungsformen der Achsfederung können sich die Arbeitsleitungen einen gemeinsamen Gasdruckspeicher teilen. Zweckmäßig ist jedoch für jede Arbeitsleitung ein separater Gasdruckspeicher mit einem Drucksensor vorgesehen, was es ermöglicht, die Gasdruckspeicher unterschiedlich vorzuspannen oder zu entlasten. Der Drucksensor ist zweckmäßig an die Steuereinrichtung angeschlossen, damit diese bei der Steuerung oder Regelung entsprechende Rückmeldungen erhält.

Um die Achsfederung lastunabhängig zu betreiben, ist bei einer weiteren vorteilhaften Ausführungsform dem Dreistellungswegeschieber ein Lastdrucksignalkreis zugeordnet, der in zwei Schaltstellungen, ausgenommen die Neutralstellung, aus jeweils einer Arbeitsleitung mit einem Lastdrucksignal speisbar ist. Das Lastdrucksignal im Lastdrucksignalkreis wird nach dem üblichen Loadsensing-Prinzip hydraulisch verarbeitet, beispielsweise in einem Zulaufregler des Dreistellungsventils und/oder im Regelsystem einer Regelpumpe. Die Druckquelle kann im Übrigen entweder eine Konstantpumpe oder eine Regelpumpe sein.

Wenn die Arbeitsmaschine beispielsweise über eine Frontanbauhydraulik ein Gerät auf dem Untergrund bewegt, könnte die Achsfederung im aktiven Zustand die Bodenanpassung des Gerätes behindern. Um dies vermeiden zu können, und die Achsfederung nicht nur passivieren sondern sozusagen hydraulisch blockieren zu können, ist bei einer weiteren zweckmäßigen Ausführungsform in jeder Arbeitsleitung zwischen einem Gasdruckspeicheranschluss und dem Hydraulikzylinder ein, vorzugsweise hydraulisch, entsperrbares Rückschlagventil angeordnet, das in Abströmrichtung aus dem Hydraulikzylinder sperrt und dann verhindert, dass sich beispielsweise der Aufbau der Arbeitsmaschine gegenüber den Rädern neigt oder verschränkt. Wenn immer jedoch bestimmte andere Federungsfunktionen der Achsfederung benötigt werden, werden die Rückschlagventile entsperrt, so dass der Hydrozylinder mit dem Gasdruckspeicher zusammenarbeiten kann. Die Entsperrung wird, zweckmäßig, hydraulisch vorgenommen, abhängig von bestimmten für solche Federungsfunktionen notwendigen Druckverhältnissen. Alternativ könnten die Rückschlagventile elektromagnetisch entsperrt werden.

Im Falle hydraulisch entsperrbarer Rückschlagventile sind schaltungstechnisch einfach Entsperrleitungen beider Rückschlagventile gemeinsam an das Wechselventil angeschlossen, so dass die Rückschlagventile automatisch entsperrt werden, sobald die beiden oder eines der Arbeitsstrom-2/2-Druckregelsitzventile aufgesteuert wird.

Bei einer weiteren zweckmäßigen Ausführungsform sind zumindest in der Neutralstellung des Dreistellungswegeschiebers beide Proportionaldruckvorsteuerungen gemeinsam und gleichartig bestrombar. Der Dreistellungswegeschieber bleibt in der Neutralstellung fixiert, wobei jedoch die tatsächlichen Schieberbetätigungssteuerdrücke beide Arbeitsstrom-2/2-Druckregelsitzventile gemeinsam proportional aufsteuern, wie dies für bestimmte Federungsfunktionen zweckmäßig sein kann. Es wird beispielsweise auf diese Weise eine Art Schwimmstellung eingestellt, in der der Hydrozylinder mit beiden Arbeitsleitungen direkt an den Dreistellungswegeschieber angeschlossen, vom Tank jedoch über den Dreistellungswegeschieber mit seiner absperrenden Neutralstellung isoliert bleibt. Die Proportionaldruckvorsteuerungen des Dreistellungswegeschiebers erfüllen somit eine Proportionalsteuerung beider Arbeitsstrom-2/2-Druckregelsitzventile. Gegebenenfalls werden die vom Tank getrennten Arbeitsleitungen im Dreistellungswegeschieber sogar kurzgeschlossen.

Besonders zweckmäßig betätigt jeder Proportionalmagnet einer Proportionaldruckvorsteuerung ein Druckminderventil, das aus einem von der Steuerdruckversorgung zumindest im Wesentlichen konstanten Steuerdruckniveau, beispielsweise zwischen etwa 20 bar und 40 bar, den tatsächlichen Schieberbetätigungssteuerdruck proportional einstellt, beispielsweise auf etwa 3 bar bis 18 bar. Der tatsächlich eingestellte Schieberbetätigungssteuerdruck wird über einen Kanal in eine Schieberbetätigungs-Steuerkammer eingespeist, z.B. um den Dreistellungswegeschieber aus seiner Neutralstellung zu verstellen. Die Anzapfung, von der der tatsächliche Schieberbetätigungssteuerdruck zum Umschaltventil gebracht wird, zweigt entweder von dem Kanal oder direkt aus der Schieberbetätigungs-Steuerkammer ab. An einer Außenseite eines Schiebergehäuses des Dreistellungswegeschiebers ist ein entsprechender Steuerleitungsanschluss vorgesehen. Somit ist der Dreistellungswegeschieber gegenüber herkömmlichen für andere Einsatzgebiete durch die Anzapfungen und die Steuerleitungsanschlüsse modifiziert, die bei Nichtgebraucht durch Stopfen blockiert werden können.

Bei einer alternativen Ausführungsform, bei der die Eingänge des Umschaltventils mit Steuerdrücken direkt aus der Steuerdruckversorgung gespeist werden, ohne hierfür die Proportionaldruckvorsteuerungen des Dreistellungswegeschiebers zu nutzen, ist zweckmäßig zwischen dem Umschaltventil und der Steuerdruckversorgung eine schwarz/weiß- oder proportional-magnetbetätigte Ventilanordnung vorgesehen. Diese Ventilanordnung kann über die Steuereinrichtung entsprechend der gewünschten Federungsfunktion betätigt werden. Im Falle eines SchwarzNVeiß-Magneten ist die Proportionalität der Aufsteuerung der beiden Arbeitsstrom-2/2-Druckregelsitzventile nicht mehr gegeben, was aber unter Umständen keinen Nachteil bedeutet.

Um Bauraum zu sparen und günstige Strömungsverhältnisse mit geringen Verlusten zu gewährleisten, ist das Rückschlagventil in ein Ermeto-Einschraubverschraubungsgehäuse integriert und über eine Entsperr-Vorentlastung mit einem z.B. bis etwa 1 : 30 betragenden Aufsteuerverhältnis entsperrbar, so dass relativ niedriger Steuerdruck ausreicht, wie er beispielsweise aus den Proportionaldruckvorsteuerungen des Dreistellungswegeschiebers abgreifbar ist. Das Aufsteuerverhältnis ist hier beispielsweise der Quotient aus dem Entsperrdruck und dem zu entsperrenden Sperrdruck, d.h. im vorliegenden Fall die Last des Hydrozylinders. Das Ermeto-Einschraubverschraubungsgehäuse kann direkt in den Hydrozylinder eingeschraubt werden und an einen Druckschlauch oder eine Druckleitung durch Verschrauben angeschlossen werden, der bzw. die die jeweilige Arbeitsleitung bildet. Der Entsperrdruck wird dann beispielsweise direkt im Hydrozylinder seitlich zu den Ermeto-Einschraubverschraubungsgehäuse gebracht.

Die verschiedenen Federungsfunktionen der Achsfederung werden über die elektrohydraulische Steuervorrichtung zweckmäßigerweise durch die computerisierte Steuereinrichtung gesteuert und überwacht, wobei besonders vorteilhaft hierfür ein CAN-Bussystem zum Einsatz kommt, an das u.a. Wegsensoren der Hydrozylinder, Drucksensoren der Gasdruckspeicher sowie die Schwarz/Weiß- und/oder Proportionalmagneten in der Steuervorrichtung, und der Antrieb der Druckquelle angeschlossen sind.

Anhand der Zeichnungen werden Ausführungsformen des Erfindungsgegenstandes erläutert. Es zeigen:
- Fig. 1 bis 5: Ausführungsbeispiele hydropneumatischer Achsfederungen von Baumaschinen, jeweils in schematischer Darstellung,
- Fig. 6: ein Blockschaltbild einer elektrohydraulischen Steuervorrichtung zumindest der Ausführungsformen der Achsfederungen der Fig. 1 bis 5, und
- Fig. 7: ein Blockschaltbild einer weiteren Ausführungsform der elektrohydraulischen Steuervorrichtung.

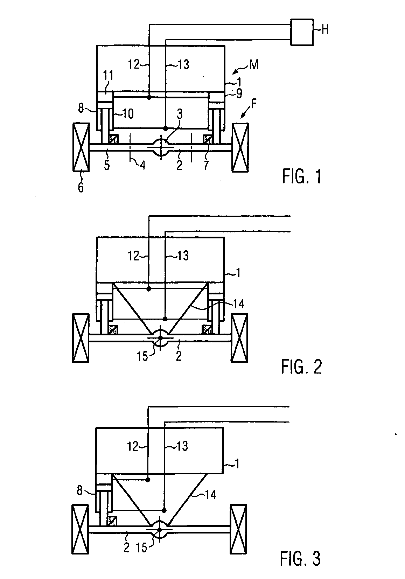

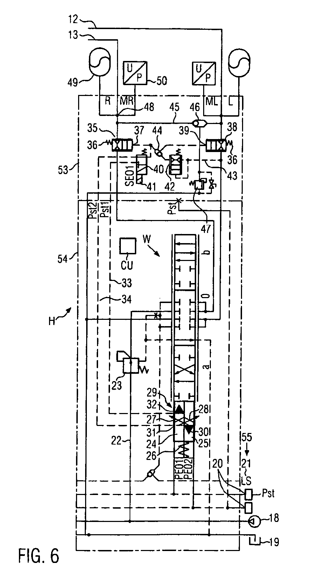

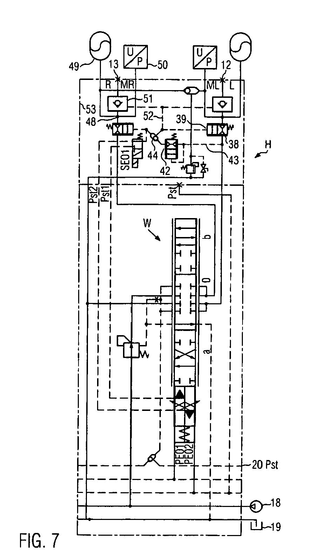

Fig. 1 zeigt in einer schematischen Querschnittsdarstellung eine vorzugsweise selbstfahrende Baumaschine M, z.B. eine Landmaschine, einen Radlader oder dgl., mit einer hydropneumatischen Achsfederung F an einer einen Aufbau 1 tragenden Starrachse 2, die beispielsweise (falls angetrieben) ein Differential 3 enthält. An die Starrachse 2 sind über schematisch angedeutete Gelenkverbindungen Pendelachsen 5 angeschlossen, an denen Räder 6 abgestützt sind und die sich gegenüber dem Aufbau 1 über hier zwei Hydrozylinder 8, 9 abstützen. Jedem Hydrozylinder 8, 9 ist ein Wegsensor 7 zugeordnet, wobei die Hydrozylinder 8 beispielsweise Differentialzylinder mit einer kolbenstangenseitigen Kammer 10 und einer kolbenseitigen Kammer 11 sind. Die beiden kolbenseitigen Kammern 11 sind gemeinsam an eine Arbeitsleitung 12 angeschlossen, während die beiden kolbenstangenseitigen Kammern 10 gemeinsam an eine Arbeitsleitung 13 angeschlossen sind. Die Arbeitsleitungen 12, 13 führen zu einer elektrohydraulischen Steuervorrichtung H, beispielsweise gemäß Fig. 6 oder Fig. 7, und sind an wenigstens einen nicht gezeigten Gasdruckspeicher angeschlossen. Die Wegsensoren 7 sind mit einer in Fig. 6 schematisch angedeuteten Steuereinrichtung CU verbunden, beispielsweise einem CAN-Zentralrechner zur Steuerung verschiedener Achsfederungsfunktionen.

Die in Fig. 2 gezeigte Ausführungsform unterscheidet sich von der der Fig. 1 dadurch, dass die Achsfederung eine Starrachse 12 aufweist, die in einem Drehpunkt 15 über eine Abstützung 14 unter dem Aufbau 1 sitzt. Der Drehpunkt 15 kann relativ zum Aufbau 1 höhenverstellbar sein.

In der Ausführungsform der Achsfederung in Fig. 3, die der Ausführungsform der Fig. 2 ähnelt, ist nur an einer Seite ein Hydrozylinder 8 vorgesehen, der die um den Drehpunkt 15 schwenkbare Starrachse 2 abstützt.

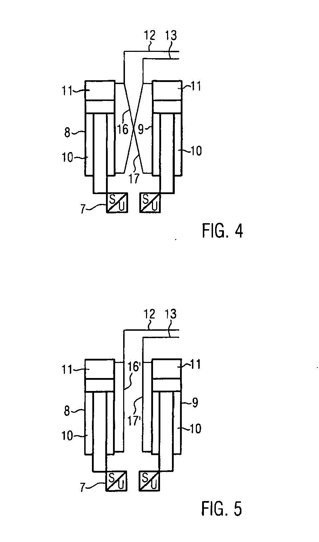

In der Ausführungsform in Fig. 4 ist in die Achsfederung F (z.B. einer Vorderachse) ein Wankausgleich integriert, beispielsweise dadurch, dass die beiden Hydrozylinder 8, 9 überkreuz über Druckleitungen 16, 17 so verschaltet sind, dass die kolbenseitige Kammer 11 des einen Hydrozylinders 8 oder 9 mit der kolbenstangenseitigen Kammer 10 des anderen Hydrozylinders kommuniziert.

In der Ausführungsform in Fig. 5 (z.B. Achsfederung einer Vorderachse) kommunizieren über die Verbindungsleitungen 16', 17' in jedem Hydrozylinder 8, 9 jeweils die kolbenseitigen und kolbenstangenseitigen Kammern 10, 11.

Elektrohydraulische Steuervorrichtungen H, z.B. der Achsfederungen F der Fig. 1 bis Fig. 5 sind jeweils an die Arbeitsleitungen 12, 13 angeschlossen und werden anhand der Fig. 6 oder Fig. 7 nachstehend im Detail erläutert.

Solche hydropneumatischen Achsfederungen für Arbeitsmaschinen haben neben grundsätzlichen Federungs- und Dämpfungsaufgaben auch die Aufgabe einer Niveauregulierung oder Nivellierung, in Verbindung gegebenenfalls mit einem Wankausgleich und/oder Hangausgleich, einer einseitigen Aufbockung, z.B. für einen Radwechsel und dgl.. Ferner kann eine Aktivierung und Passivierung oder Verblockung der Achsfederung, ein Anheben und Absenken des Aufbaus, und eine Verstellung der Federung bzw. Dämpfung zwischen härter und weicher erforderlich sein. Alle oder einige der vorerwähnten Federungsfunktionen und Anforderungen lassen sich mit der elektrohydraulischen Steuervorrichtung H der Fig. 6 oder Fig. 7 nach Bedarf erfüllen.

Die hydraulische Steuervorrichtung H in Fig. 6 enthält einen Dreistellungswegeschieber W (3/4-Wegeschieber) mit einer zumindest in Abströmrichtung zu einem Tank 19 blockierten Neutralstellung 0, einer ersten Schaltstellung a, in der eine Druckleitung 22 mit der Arbeitsleitung 12, hingegen die Arbeitsleitung 13 mit einem Tank 19 verbunden ist, und einer zweiten Arbeitsstellung b, in der die Druckleitung 22 mit der Arbeitsleitung 13, hingegen die Arbeitsleitung 12 mit dem Tank 19 verbunden ist. Über zwei Proportionalmagneten 27, 28 und Druckvorsteuerungen 24, 25 wird der Dreistellungswegeschieber W zumindest proportional betätigt, d.h. abhängig von der jeweiligen Bestromung (PE01, PE02).

Der Dreistellungswegeschieber W ist zwischen einer Druckquellen/Tank-Anordnung 18, 19 und den Hydrozylindern 8, 9 angeordnet, wobei die Druckquelle 18 eine Konstantpumpe oder eine Regelpumpe sein kann. Beispielsweise im Fall einer Konstantpumpe als Druckquelle 18 kann in der Druckleitung 22 ein Zulaufregler 23 angeordnet sein.

Der Dreistellungswegeschieber W weist die Proportionaldruckvorsteuerungen 24, 25 auf, mit denen die drei Schaltstellungen a, b, O einstellbar sind, wobei zur Neutralstellung O eine Federanordnung 26 wirkt. In jeder Proportionaldruckvorsteuerung 24, 25 ist ein Proportionalmagnet 27, 28 vorgesehen, der beispielsweise ein Druckminderventil 29 betätigt, das aus einem im Wesentlichen konstanten Steuerdruckniveau (Pst) einer Steuerdruckversorgung 20 in einer nicht gezeigten Steuerkammer zur Schieberbetätigung einen tatsächlichen Steuerdruck generiert. Ferner weisen die Proportionaldruckvorsteuerungen 24, 25 Anzapfungen 31, 32 für die tatsächlich generierten Steuerdrücke auf. Das Steuerdruckniveau (Pst) der Steuerdruckversorgung 20 liegt beispielsweise zwischen etwa 20 bar und 40 bar und wird entweder über eine eigene Druckquelle erzeugt oder vom Versorgungsdruck der Druckquelle 18 abgeleitet. Der jeweils generierte tatsächliche Steuerdruck (Pst1 und Pst2) zur Schieberbetätigung wird über Steuerleitungen 33, 34 von den Anzapfungen 31, 32 zu zwei Eingängen eines Umschaltventils 40 übertragen. In der in Fig. 6 gezeigten Ausführungsform ist das Umschaltventil 40 ein 2/3-Wegeschaltventil mit Betätigung durch einen Schwarz/Weiß-Magneten 41, dessen Aktivierung mit SE01 angedeutet ist, und der gegen eine Rückstellfeder arbeitet. Das Umschaltventil 40 ist zwei in den Arbeitsleitungen 12, 13 angeordneten Arbeitsstrom-2/2-Druckregelsitzventilen 35, 38 gemeinsam vorgeschaltet, und zwar an diesem vorgesehenen Aufsteuerseiten 37, 39 und entgegengesetzt zu Rückstellfedern 36. Alternativ (nicht gezeigt) könnte das Umschaltventil 40 druckgesteuert umschalten, z.B. über Pst1, Pst2 oder Pst.

Von der Arbeitsleitung 12 zweigt zwischen dem Dreistellungswegeschieber W und dem einen Arbeitsstrom-2/2-Druckregelsitzventil 38 eine Steuerleitung 43 ab, die zu einem zwischen den Aufsteuerseiten 37, 39 verschalteten Wechselventil 44 führt und ein aus der Steuerleitung 43 druckvorgesteuertes Steuerstrom-2/2-Druckregelsitzventil 42 enthält.

An Knoten 48 in den Arbeitsleitungen 12, 13 ist zwischen jedem Arbeitsstrom-2/2-Druckregelsitzventil 35, 38 und dem Hydrozylinder 8, 9 ein Gasdruckspeicher 49 sowie, vorzugsweise, ein Drucksensor 50 angeschlossen. Der Gasdruckspeicher 49 enthält beispielsweise durch eine Membrane getrennt eine Füllung des Hydraulikmediums und eines Druckgases, wie Stickstoff. Zwischen den Knoten 48 und den Arbeitsstrom-2/2-Druckregelsitzventilen 35, 38 verläuft zwischen dem Arbeitsleitungen 12, 13 eine Verbindungsleitung 45 mit einem Wechselventil 46, das mittig an eine Sekundärdruckbegrenzung (einstellbares Druckbegrenzungsventil) 47 angeschlossen ist, die wiederum an eine Leitung zum Tank 19 angeschlossen ist.

Die Steuereinrichtung CU, beispielsweise ein CAN-Zentralrechner, ist mit den elektrischen Ausstattungskomponenten der elektrohydraulischen Steuervorrichtung H und der Achsfederung F verbunden, beispielsweise über ein CAN-Bussystem.

Ferner ist ein Lastdrucksignalkreis LS bei 21 angedeutet, an den beispielsweise der Zulaufregler 23 zusteuerseitig angeschlossen ist, und der in den beiden Steuerstellungen a, b über den Dreistellungswegeschieber W aus den Arbeitsleitungen 12, 13 mit einem Lastdrucksignal gespeist wird.

In Fig. 6 ist jeder Arbeitsleitung 12, 13 ein Gasdruckspeicher 49 zugeordnet. Bei einer nicht gezeigten Alternative könnte auch ein gemeinsamer Gasdruckspeicher 49 verwendet werden.

Die in Fig. 7 gezeigte Ausführungsform der elektrohydraulischen Steuervorrichtung H unterscheidet sich von der der Fig. 6 dadurch, dass zwischen den Knoten 48 der Arbeitsleitung 12, 13, an denen die Gasdruckspeicher 49 (und die Drucksensoren 50) angeschlossen sind, und den Hydrozylindern 8, 9 jeweils ein entsperrbares Rückschlagventil 51 vorgesehen ist, das in Abströmrichtung aus dem Hydrozylinder 8, 9 sperrt und aus einer Entsperrleitung 52 z.B. hydraulisch entsperrbar ist, zweckmäßig mit einem Aufsteuerverhältnis von etwa 1 : 25 bis etwa 1 : 30, wofür das Rückschlagventil 51 zweckmäßig eine Vorentlastung (nicht gezeigt) enthält. Die Entsperrleitungen 52 beider Rückschlagventile 51 sind mittig an das Wechselventil 44 angeschlossen. Der weitere Aufbau der elektrohydraulischen Steuervorrichtung H in Fig. 7 entspricht dem der Fig. 6.

Um die Achsfederung zu aktivieren, wird in der elektrohydraulischen Steuervorrichtung H in Fig. 6 der Proportionalmagnet 27 und/oder 28 über die Steuereinrichtung CU bestromt (PE01 oder PE02), wobei eine Regelung unter Berücksichtigung der Signale der Drucksensoren 50 der linken und rechten Seiten und der Wegsensoren 7 erfolgt. Das Umschaltventil 40 ist in der gezeigten Schaltstellung, d.h. der Schwarz/Weiß-Magnet 41 ist stromlos. Zum Passivieren der Achsfederung werden sämtliche Magneten 27, 28, 41 stromlos geschaltet.

Zum Heben des Aufbaus 1 wird unter Berücksichtigung der Signale der Drucksensoren 50 und der Wegsensoren 7 bei nicht bestromtem Schwarz/Weiß-Magneten 41 nur der Proportionalmagnet 27 entsprechend bestromt. Zum Senken des Aufbaus 1 wird nur der Proportionalmagnet 28 bestromt, wobei das Signal des linken Drucksensors 50 und der Wegsensoren 7 steuerungsseitig verarbeitet werden, und der Schwarz/Weiß-Magnet 41 stromlos geschaltet ist.

Um die Dämpfung der Achsfederung F härter einzustellen, wird unter ausschließlicher Berücksichtigung der Signale der Drucksensoren 50 für die linken und rechten Seiten bei stromlosem Schwarz/Weiß-Magneten 41 nur der Proportionalmagnet 27 bestromt. Um die Dämpfung weicher einzustellen, wird ebenfalls nur unter Berücksichtigung der Signale der Drucksensoren 50 an den linken und rechten Seiten bei stromlosem Schwarz/Weiß-Magneten 41 nur der Proportionalmagnet 28 entsprechend bestromt, beispielsweise um Druckmittel aus den kolbenseitigen Kammern 11 abzulassen, ohne die Druckquelle 18 notwendigerweise zu aktivieren.

Um die Achsfederung zu aktivieren, wird entsprechend Hydraulikmedium (arbeitsstrom) eingespeist, wobei die Drucksensoren 50 und die Wegsensoren 7 zur Regelung ihre Signale an die Steuereinrichtung CU übermitteln. Wird beispielsweise der Proportionalmagnet 27 bestromt, nimmt der Dreistellungsschieber W proportional zur Bestromung seine Schaltstellung a ein, so dass Druckmittel aus der Druckleitung 22 in die Arbeitsleitung 12 eingespeist wird. Der tatsächliche Betätigungssteuerdruck des Druckminderventils 29, der auf einen nicht hervorgehobenen Schieberkolben des Dreistellungsschiebers W wirkt, wird über die Anzapfung 32 und die Steuerleitung 33 an den blockierten Eingang des Umschaltventils 40 übertragen, wirkt jedoch nicht auf die Aufsteuerseiten 37, 39 der Arbeitsstrom-2/2-Wegesitzventile 38, 35. Somit bleibt die Arbeitsleitung 13 durch das Arbeitsstrom-2/2-Wegesitzventil 35 abgesperrt. Hingegen steuert der aus der Druckleitung 22 in die Arbeitsleitung 12 eingespeiste Arbeitsdruck über die Steuerleitung 43 das Steuerstrom-2/2-Wegesitzventil 42 auf, das über das Wechselventil 44 die Aufsteuerseite 39 beaufschlagt und das Arbeitsstrom-2/2-Wegesitzventil 38 aufsteuert, so dass die Arbeitsleitung 12 zum Hydrozylinder 8, 9 bzw. den kolbenseitigen Kammern 12 durchgängig ist. Auch wird zumindest der rechte Gasdruckspeicher 49 aufgeladen.

Um die Achsfederung passiv zu schalten, bleiben, wie erwähnt, die Proportionalmagneten 27, 28 und der Schwarz/Weiß-Magnet 41 unbestromt, und werden auch keine Signale von den Druck- und Wegsensoren 50, 7 verarbeitet. Es liegt die in Fig. 6 gezeigte Situation vor. Gegebenenfalls wird ohne Aktivierung der Druckquelle 18 Hydraulikmedium abgelassen.

Zum Heben des Aufbaus 1 werden bei aktivierter Achsfederung der Proportionalmagnet 27 und der Schwarz/Weiß-Magnet 41 bestromt, und werden in der Steuereinrichtung CU die Signale der Druck- und Wegsensoren 50, 7 verarbeitet, während über die Arbeitsleitung 12 Hydraulikmedium in die kolbenseitigen Kammern 11 eingespeist wird. Gleichzeitig wird der tatsächliche Betätigungssteuerdruck Pst1 von der Anzapfung 32 über das dann umgeschaltete Umschaltventil 40 auf beide Aufsteuerseiten 37, 39 übertragen, so dass beide Arbeitsstrom-2/2-Wegesitzventile 35, 38 aufgesteuert sind, so dass die Arbeitsleitung 12 zum Heben durchgängig ist, und aus der Arbeitsleitung 13 Hydraulikmedium von den kolbenstangenseitigen Kammern 10 zum Tank 19 abströmt.

Zum Senken des Aufbaus 1 wird hingegen der Proportionalmagnet 28 bestromt, während der Schwarz/Weiß-Magnet 41 unbestromt bleibt, so dass der von der Anzapfung 31 über die Steuerleitung 34 wirkende tatsächliche Betätigungssteuerdruck auf beide Aufsteuerseiten 37, 39 aufgebracht wird und bei nicht aktivierter Druckquelle 18 Hydraulikmedium aus den kolbenseitigen Kammern 11 zum Tank 19 abströmt.

Um bei aktivierter Achsfederung die Dämpfung härter einzustellen, wird ebenfalls der Proportionalmagnet 27 bestromt, während der Schwarz/Weiß-Magnet 41 unbestromt bleibt. Die Signale der linken und rechten Drucksensoren 50 werden hierbei verarbeitet. Von dem tatsächlich eingestellten Betätigungssteuerdruck Pst2 werden beide Arbeitsstrom-2/2-Wegesitzventile 38, 35 aufgesteuert, so dass Hydraulikmedium aus der Arbeitsleitung 12 und zumindest dem rechten Gasdruckspeicher 49 zum Tank 19 (Schaltstellung b des Dreistellungswegeschiebers W) abströmt.

Diese Funktionen stellen nur eine nicht beschränkende Auswahl möglicher Achsfederungsfunktionen dar und sind auch für die Ausführungsformen der Fig. 4 und Fig. 5 der Achsfederungen F mit Wankausgleich bzw. kurzgeschlossenen kolbenseitigen und kolbenstangenseitigen Kammern 10, 11 möglich.

Allerdings ist in der Ausführungsform der elektrohydraulischen Steuervorrichtung H in Fig. 6 in aktiviertem Zustand keine Abschaltung der Gasdruckspeicher 49 von den Hydrozylindern 8, 9 möglich.

Diese Möglichkeit ist bei der Ausführungsform der elektrohydraulischen Steuervorrichtung H in Fig. 7 dadurch geboten, dass in den Arbeitsleitungen 12, 13 hier z.B. hydraulisch entsperrbare Rückschlagventile 51 zwischen den Hydrozylindern 8, 9 und dem Knoten 48 eingesetzt sind (alternativ könnten die Rückschlagventile 51 auch auf andere Weise entsperrt werden, als hydraulisch, z.B. elektrohydraulisch, magnetisch, oder gegebenenfalls mechanisch und/oder bei Bedarf). Die Rückschlagventile 51 tragen im Sperrzustand nicht nur die Last der Hydrozylinder 8, 9, sondern sind immer in ihren Absperrstellungen, wenn nicht vom Dreistellungswegeschieber W Druckmittel in die Arbeitsleitung 12 oder 13 eingespeist wird (dann öffnen die Rückschlagventile 51 selbsttätig) oder solange in den Entsperrleitungen 52 kein Entsperrdruck aufgebaut wird. Der notwendige Entsperrdruck in der Entsperrleitung 52 liegt immer an, wenn der tatsächlich eingestellte Betätigungssteuerdruck Pst2 oder Pst1 an die Aufsteuerseiten 37, 39 übertragen wird, oder auch dann, wenn über die Steuerleitung 43 und das Steuerstrom-2/2-Wegesitzventil 42 bei umgeschaltetem Wechselventil 44 nur die Aufsteuerseite 39 beaufschlagt wird.

Die elektrohydraulische Steuervorrichtung H in den Fig. 6 und Fig. 7 weist einen Blockaufbau auf, mit einem die Komponenten 35 bis 47 enthaltenden Block 53, der auf einen den Dreistellungswegeschieber W enthaltenden Block 54 gesetzt ist, an dem wiederum ein nur schematisch angedeuteter Eingangsblock 55 seitlich angeschraubt werden kann. Der Block 53 kann bei Bedarf durch den Block 53' von Fig. 7 mit dem Block 54 ersetzt werden. Anstelle eines Eingangsblocks 55, z.B. bei einer Druckquelle 18 in Form einer Konstantpumpe mit üblichen Regelkomponenten kann ein anderer Eingangsblock beispielsweise für eine Regel- oder Verstellpumpe mit deren üblichen Regelkomponenten angesetzt werden.

Der Block 53 kann alternativ (nicht gezeigt) unterschiedlich bestückt werden, als gezeigt, um die anhand von Fig. 6 und Fig. 7 erläuterten Funktionen erfüllen zu können.

Ein wesentlicher Gesichtspunkt der in den Fig. 6 und Fig. 7 gezeigten Ausführungsformen liegt darin, dass die tatsächlich eingestellten Betätigungssteuerdrücke Pst1, Pst2 auch zum Steuern der Arbeitsstrom-2/2-Wegesitzventile 35, 38 verwendet werden. Diese Steuerdrücke Pst1 und Pst2 werden proportional beispielsweise zwischen etwa 3 bar und 18 bar bei einem Versorgungsdruckniveau von etwa 20 bar eingestellt, und ermöglichen es, die Umschaltung bzw. Auf- und Zusteuerung der Arbeitsstrom-2/2-Wegesitzventile 35, 38 nach Bedarf schärfer oder milder vorzunehmen, ohne dafür eigene Ventilanordnungen oder Steuerroutinen vorsehen zu müssen, da die Proportionalmagneten 27, 28 mit den Druckminderventilen 30, 29 für diese Aufgabe bestens geeignet sind. Es kann ferner, falls für eine weitere Achsfederungsfunktion oder Aufgabe zweckmäßig, gleichzeitig der Proportionalmagnet 27 und der Proportionalmagnet 28 gleichartig bestromt werden, um den Dreistellungsschieber W in der Neutralstellung O zu blockieren, und beide Steuerdrücke Pst1 und Pst2 gleichzeitig und mit gleichen Druckwerten zu generieren, um sicherzustellen, dass unabhängig davon, ob der Schwarz/Weiß-Magnet 41 bestromt ist, oder nicht, beide Arbeitsstrom-2/2-Wegesitzventile 35, 38 gleich aufgesteuert werden. Die Arbeitsleitungen 12, 13 könnten dann gegebenenfalls kurzgeschlossen werden, z.B. im Dreistellungswegeschieber W.

Der Lastdrucksignalkreis 21, LS wird in den Schaltstellungen a und b mit dem jeweiligen Lastdruck in der Arbeitsleitung 12 oder 13 über entsprechende Durchgänge im Dreistellungswegeschieber W auf übliche Weise gespeist, beispielsweise zur ordnungsgemäßen Betätigung des Zulaufreglers 23 und/oder anderer in den Fig. 6 und 7 nicht gezeigter, auf den Lastdruck ansprechender Ausstattungskomponenten.

Der jeweils verwendete Dreistellungswegeschieber W ist beispielsweise der von der Anmelderin seit Jahren vertriebene Typ PSL (für eine Konstantpumpe als Druckquelle 18) oder PSV (für eine Regelpumpe als Druckquelle 18), der jedoch dahingehend modifiziert ist, dass in von den Druckminderventilen 29, 30 zu den Steuerkammern des Schieberkolbens verlaufenden Kanälen oder in den Steuerkammern die Anzapfungen 31, 32 vorgesehen sind, die an der Außenseite eines Schiebergehäuses entsprechende Steuerdruckanschlüsse aufweisen.

Den Steuerdrücken Pst1, Pst2 entsprechende Steuerdrücke könnten alternativ (nicht gezeigt), gegebenenfalls sogar proportional, direkt von Pst aus der Steuerdruckversorgung 20 abgeleitet werden, z.B. über geeignete Ventilanordnungen, und ohne Mitwirkung des Dreistellungswegeschiebers W.

## Patentansprüche

1. Elektrohydraulische Steuervorrichtung (H) einer hydropneumatischen Achsfederung (F) einer Arbeitsmaschine (M), mit wenigstens einem doppelseitig wirkenden Hydrozylinder (8, 9) der Achsfederung (F), der über die zwischen einer Druckquellen/Tank-Anordnung (18, 19) und dem Hydrozylinder (8, 9) angeordnete, von einer Steuereinrichtung (CU) steuerbaren und/oder überwachbare Steuervorrichtung (H) beaufschlagbar ist, wobei die Steuervorrichtung (H) umfasst:
einen zwei elektrohydraulische Proportionalvorsteuerungen (24, 25) und eine zumindest in Abströmrichtung zum Tank (19) blockierte Neutralstellung (O) aufweisenden Dreistellungswegeschieber (W) zwischen der Druckquellen/Tank-Anordnung und Arbeitsleitungen (12, 13) des Hydrozylinders (8, 9),
je ein druckvorgesteuertes Arbeitsstrom-2/2-Druckregelsitzventil (35, 38) in jeder Arbeitsleitung (12, 13), **dadurch gekennzeichnet, dass**
den Aufsteuerseiten (37, 39) beider Arbeitsstrom-2/2-Druckregelsitzventile (35, 38) gemeinsam ein Umschaltventil (40) vorgesetzt ist, das in einer wahlweise an die Aufsteuerseite (39) nur eines Arbeitsstrom-2/2-Druckregelsitzventils (38) anschließbaren Steuerleitung (43) ein druckvorgesteuertes 2/2-Steuerstrom-Druckregelsitzventil (42) angeordnet ist, und dass an Eingänge des Umschaltventils (40) angeschlossene Steuerleitungen (33, 34) wahlweise mit Steuerdruck (Pst1, Pst2) aus einer Steuerdruckversorgung (20) für die Proportionaldruckvorsteuerungen (24, 25) des Dreistellungswegeschiebers (W) beaufschlagbar sind.

2. Elektrohydraulische Steuervorrichtung nach Anspruch 1, **dadurch gekennzeichnet, dass** der Dreistellungswegeschieber (W) Anzapfungen (31, 32) für die aus der Steuerdruckversorgung (20) abgeleiteten, in den Proportionaldruckvorsteuerungen (24, 25) proportional eingestellten, tatsächlichen Schieberbetätigungs-Steuerdrücke (Pst1, Pst2) aufweist, und dass jede Steuerdruckanzapfung (31, 32) mit einem von zwei Eingängen des Umschaltventils (40) verbunden ist.

3. Elektrohydraulische Steuervorrichtung nach Anspruch 1, **dadurch gekennzeichnet, dass** das Umschaltventil (40) mit einem Schwarz/Weiß-Schaltmagneten (41) betätigbar ist.

4. Elektrohydraulische Steuervorrichtung nach Anspruch 1, **dadurch gekennzeichnet, dass** zwischen dem mit der Aufsteuerseite (39) des einen Arbeitsstrom-2/2-Druckregelsitzventils (38) verbundenen Steuerstrom-2/2-Druckregelsitzventil (42) und dem mit den Aufsteuerseiten (37, 39) beider Arbeitsstrom-2/2-Druckregelsitzventile (35, 38) verbundenen einzigen Ausgang des Umschaltventils (40) ein Wechselventil (44) angeordnet ist.

5. Elektrohydraulische Steuervorrichtung nach Anspruch 1, **dadurch gekennzeichnet, dass** die Arbeitsleitungen (12, 13) zwischen dem Hydrozylinder (8, 9) und den Arbeitsstrom-2/2-Druckregelsitzventilen (35, 38) an einen Gasdruckspeicher (49) mit zugeordnetem Drucksensor (50) angeschlossen ist, vorzugsweise an einen separaten Gasdruckspeicher pro Arbeitsleitung (12, 13).

6. Elektrohydraulische Steuervorrichtung nach Anspruch 1, **dadurch gekennzeichnet, dass** dem Dreistellungswegeschieber (W) ein Lastdrucksignalkreis (LS, 21) zugeordnet ist, der in zwei Schaltstellungen (a, b), ausgenommen die Neutralstellung (O), aus jeweils einer Arbeitsleitung (12, 13) mit einem Lastdrucksignal speisbar ist.

7. Elektrohydraulische Steuervorrichtung nach Anspruch 5, **dadurch gekennzeichnet, dass** in jeder Arbeitsleitung (12, 13) zwischen einem Gasdruckspeicheranschluss-Knoten (48) und dem Hydrozylinder (8, 9) ein, vorzugsweise hydraulisch, entsperrbares Rückschlagventil (51) angeordnet ist, das in Abströmrichtung aus dem Hydrozylinder (8, 9) sperrt.

8. Elektrohydraulische Steuervorrichtung nach Anspruch 4 und 7, **dadurch gekennzeichnet, dass** Entsperrleitungen (52) beider Rückschlagventile (51) gemeinsam an das Wechselventil (44) angeschlossen sind.

9. Elektrohydraulische Steuervorrichtung nach wenigstens einem der Ansprüche 1 bis 8, **dadurch gekennzeichnet, dass** zumindest in der Neutralstellung (O) des Dreistellungswegeschiebers (W) beide Proportionaldruckvorsteuerungen (24, 25) gemeinsam und gleich bestrombar sind.

10. Elektrohydraulische Steuervorrichtung nach Anspruch 2, **dadurch gekennzeichnet, dass** jeder Proportionalmagnet (27, 28) einer Proportionaldruckvorsteuerung (24, 25) im Dreistellungswegeschieber (W) ein Druckminderventil (29, 30) betätigt, das aus einem in der Steuerdruckversorgung (20) zumindest im Wesentlichen konstanten Steuerdruckniveau (Pst) den tatsächlichen Schieberbetätigungsdruck (Pst1, Pst2) generiert, der über einen Kanal in eine Schieberbetätigungs-Steuerkammer einspeisbar ist, und dass die Anzapfung (31, 32) entweder vom Kanal oder aus der Schieberbetätigungs-Steuerkammer abzweigt und an einer Außenseite des Schiebergehäuses einen Steuerleitungsanschluss aufweist.

11. Elektrohydraulische Steuervorrichtung nach Anspruch 1, **dadurch gekennzeichnet, dass** die Steuerleitungen (33, 34) direkt an die Steuerdruckversorgung (20) angeschlossen sind, vorzugsweise über eine schwarz/weiß- oder proportionalmagnet-betätigte Ventilanordnung.

12. Elektrohydraulische Steuervorrichtung nach Anspruch 7, **dadurch gekennzeichnet, dass** das Rückschlagventil (51) in ein Ermeto-Einschraubverschraubungsgehäuse integriert und mit einem zwischen in etwa 1 : 25 bis 1 : 30 liegenden Aufsteuerverhältnis mit Entsperr-Vorentlastung entsperrbar ist, dass das Ermeto-Einschraubverschraubungsgehäuse in den Hydrozylinder (8, 9) eingeschraubt ist, und dass am Ermeto-Einschraubverschraubungsgehäuse ein Druckschlauch oder eine Druckleitung als Arbeitsleitung (12, 13) verschraubt ist.

## Claims

1. Electro-hydraulic control device (H) of a hydro-pneumatic axle spring suspension (F) of a working machine (M), comprising at least one double actuated hydro-cylinder (8, 9) of the axle spring suspension (F), which hydro-cylinder (8, 9) is actuable by the control device (H) which is arranged between a pressure source/tank assembly (18, 19) and the hydro-cylinder (8, 9) and is controlled and/or monitored by a control assembly (CU), the control device (H) including:
a three position multi-way slider valve (W) between the pressure source/tank assembly and working lines (12, 13) of the hydro-cylinder (8, 9), the three position multi-way slider valve (W) comprising two electro-hydraulic proportional pilot controls (24, 25) and a neutral position (O) blocking at least in discharge flow direction to the tank (19),
a respective pilot pressure controlled working flow 2/2-pressure regulating seat valve (35, 38) in each working line (12, 13), **characterised in that**
a switchover valve (40) is in common arranged upstream of the opening control sides (37, 39) of the two working flow 2/2-pressure regulating seat valves (35, 38), that a pilot pressure controlled 2/2-control flow pressure regulating seat valve (42) is arranged in a pilot line (43) which pilot line (43) selectively is to be connected with the opening control side (39) of only one working flow 2/2-pressure regulating seat valve (38), and that pilot lines (34, 33) connected with in-flow ports of the switchover valve (40) are supplied selectively with pilot pressure (Pst1, Pst2) from a pilot pressure supply (20) provided for the proportional pilot controls (24, 25) of the three position multi-way slider valve (W).

2. Electro-hydraulic control device according to claim 1, **characterised in that** the three position multi-way slider valve (W) has tappings (31, 32) for the actual slider actuating control pressures (Pst1, Pst2) as derived from the pilot pressure supply (20) and proportionally adjusted in the proportional pilot controls (24, 25), and that each pilot pressure tapping (31, 32) is connected with one of two in-flow ports of the switchover valve (40).

3. Electro-hydraulic control device according to claim 1, **characterised in that** the switchover valve (40) is actuated by a black/white switching solenoid (41).

4. Electro-hydraulic control device according to claim 1, **characterised in that** a shuttle valve (44) is provided between the control flow 2/2-pressure regulating seat valve (42) connected with the opening control side (39) of the working flow 2/2-pressure regulating seat valve (38) and the single out-flow port of the switchover valve (40) connected with the opening control sides (37, 39) of both working flow 2/2-pressure regulating seat valves (35, 38).

5. Electro-hydraulic control device according to claim 1, **characterised in that** the working lines(12, 13) are connected between the hydro-cylinder (9, 8) and the working flow 2/2-pressure regulating seat valves (35, 38) to a gas pressure accumulator (49) having an associated to pressure sensor (50), preferably, to a separate gas pressure accumulator per working line (12, 13).

6. Electro-hydraulic control device according to claim 1, **characterised in that** a load pressure signal circuit (LS, 21) is associated to the three position multi-way slider valve (W), which load pressure signal circuit (LS) can be supplied with a load pressure signal of a respective one working line (12, 13) in two switching positions (a, b) except the neutral position (O) of the slider valve (W).

7. Electro-hydraulic control device according to claim 5, **characterised in that** an unlockable, preferably hydraulically unlockable, check valve (51) blocking in discharge flow direction out of the hydro-cylinder (8, 9) is arranged in each working line (12, 13) between a connection node (48) for a gas pressure accumulator and the hydro-cylinder (8, 9).

8. Electro-hydraulic control device according to claim 4 and 7, **characterised in that** unlocking lines (52) of both unlockable check valves (51) are commonly connected to the shuttle valve (44).

9. Electro-hydraulic control device according to at least one of claims 1 to 8, **characterised in that** both proportional pilot controls (25, 24) are equally and commonly supplied with current at least in the neutral position (O) of the three position multi-way slider valve (W).

10. Electro-hydraulic control device according to claim 2, **characterised in that** each proportional solenoid (27, 28) of a proportional pilot pressure control (24, 25) is actuating a pressure reducing valve (29, 30) in the three position multi-way slider valve (W) which pressure reducing valve (29, 30) generates the actual slider valve actuating pressure (Pst1, Pst2) from a substantially constant control pressure level (Pst) of the control pressure supply (20), which actual slider valve actuating pressure is supplied through a channel into a slider actuating control chamber, and that the tapping (31, 32) branches off either from the channel or from the slider actuating control chamber and has a pilot line connection port at an outer side of a slider valve housing.

11. Electro-hydraulic control device according to claim 1, **characterised in that** the pilot lines (33, 34) are directly connected with the control pressure supply (20), preferably via a valve arrangement which is actuated either by black/white solenoids or proportional solenoids.

12. Electro-hydraulic control device according to claim 7, **characterised in that** each check valve(51) is structurally integrated into a Ermeto-threaded connection housing and is unlockable by an opening control ratio amounting between about 1:25 to 1:30 including a unlocking pre-relief feature, that the Ermeto threading connection housing is threaded into the hydro-cylinder (8, 9), and that a pressure hose or a pressure line serving as the respective working line (12, 13) is connection by threading to the Emeto threading connection housing.

## Revendications

1. Dispositif de commande électro-hydraulique (H) d'une suspension d'essieu (F) hydropneumatique d'une machine de travail (M), comprenant au moins un cylindre hydraulique à double effet (8, 9) de la suspension d'essieu (F), qui peut être sollicité par l'intermédiaire du dispositif de commande (H), disposé entre un agencement de source de pression/réservoir (18, 19) et le cylindre hydraulique (8, 9) et qui peut être commandé et/ou contrôlé par une unité de commande (CU), le dispositif de commande (H) comprenant :
un distributeur à trois positions (W) entre l'agencement de source de pression/réservoir et des conduites de travail (12, 13) du cylindre hydraulique (8, 9), qui présente deux commandes pilotes proportionnelles (24, 25) électro-hydrauliques et une position neutre (O) bloquée au moins dans la direction d'écoulement vers le réservoir (19),
une vanne à siège de réglage de pression à 2/2 voies (35, 38) du courant de travail, pilotée en pression, dans chaque conduite de travail (12, 13), **caractérisé en ce que**
une vanne de commutation (40) est montée conjointement en amont des côtés commande (37, 39) des deux vannes à siège de réglage de pression à 2/2 voies (35, 38) du courant de travail, qu'une vanne à siège de réglage de pression à 2/2 voies (42) du courant pilote, pilotée en pression, est disposée dans une conduite pilote (43) raccordable sélectivement au côté commande (39) d'une seule vanne à siège de réglage de pression à 2/2 voies (38) du courant de travail, et que des conduites pilotes (33, 34), raccordées aux entrées de la vanne de commutation (40), peuvent être sollicitées sélectivement par la pression pilote (Pst1, Pst2) à partir d'une alimentation en pression pilote (20) pour les commandes pilotes de pression proportionnelles (24, 25) du distributeur à trois positions (W).

2. Dispositif de commande électro-hydraulique selon la revendication 1, **caractérisé en ce que** le distributeur à trois positions (W) présente des prises (31, 32) pour les pressions pilotes effectives (Pst1, Pst2) d'actionnement du distributeur, dérivées de l'alimentation en pression pilote (20) et réglées proportionnellement dans les commandes pilotes de pression proportionnelles (24, 25), et que chaque prise de pression pilote (31, 32) est reliée à l'une de deux entrées de la vanne de commutation (40).

3. Dispositif de commande électro-hydraulique selon la revendication 1, **caractérisé en ce que** la vanne de commutation (40) est actionnable par un aimant de commutation tout ou rien (41).

4. Dispositif de commande électro-hydraulique selon la revendication 1, **caractérisé en ce qu'**une vanne à deux voies (44) est disposée entre la vanne à siège de réglage de pression à 2/2 voies (42) du courant pilote, reliée au côté commande (39) d'une vanne à siège de réglage de pression à 2/2 voies (38) du courant de travail, et la sortie unique de la vanne de commutation (40), reliée aux côtés commande (37, 39) des deux vannes à siège de réglage de pression à 2/2 voies (35, 38) du courant de travail.

5. Dispositif de commande électro-hydraulique selon la revendication 1, **caractérisé en ce que** les conduites de travail (12, 13) sont raccordées entre le cylindre hydraulique (8, 9) et les vannes à siège de réglage de pression à 2/2 voies (35, 38) du courant de travail à un accumulateur sous pression de gaz (49) avec capteur de pression (50) associé, de préférence à un accumulateur sous pression de gaz séparé par conduite de travail (12, 13).

6. Dispositif de commande électro-hydraulique selon la revendication 1, **caractérisé en ce qu'**un circuit de signalisation de la pression de charge (LS, 21) est associé au distributeur à trois positions (W), lequel circuit peut être alimenté par un signal de pression de charge dans deux positions de commutation (a, b), excepté la position neutre (O), à partir de respectivement une conduite de travail (12, 13).

7. Dispositif de commande électro-hydraulique selon la revendication 5, **caractérisé en ce qu'**une vanne anti-retour (51) pouvant être déverrouillée, de préférence par voie hydraulique, est disposée dans chaque conduite de travail (12, 13) entre un noeud (48) de raccordement de l'accumulateur sous pression de gaz et le cylindre hydraulique (8, 9), laquelle vanne ferme dans la direction d'échappement du cylindre hydraulique (8, 9).

8. Dispositif de commande électro-hydraulique selon les revendications 4 et 7, **caractérisé en ce que** des conduites de déverrouillage (52) des deux vannes anti-retour (51) sont raccordées conjointement à la vanne à deux voies (44).

9. Dispositif de commande électro-hydraulique selon l'une au moins des revendications 1 à 8, **caractérisé en ce que** les deux commandes pilotes de pression proportionnelles (24, 25) peuvent être alimentées en courant conjointement et également au moins dans la position neutre (O) du distributeur à trois positions (W).

10. Dispositif de commande électro-hydraulique selon la revendication 2, **caractérisé en ce que** chaque aimant proportionnel (27, 28) d'une commande pilote de pression proportionnelle (24, 25) dans le distributeur à trois positions (W) actionne une vanne de réduction de pression (29, 30) qui génère, à partir d'un niveau de pression pilote (Pst) au moins essentiellement constant dans l'alimentation en pression pilote (20), la pression d'actionnement de vanne effective (Pst1, Pst2), laquelle pression peut être injectée par l'intermédiaire d'un canal dans un compartiment de commande d'actionnement de vanne, et que la prise (31, 32) est en dérivation soit du canal, soit du compartiment de commande d'actionnement de vanne, et présente sur un côté extérieur du corps de vanne un raccord de conduite pilote.

11. Dispositif de commande électro-hydraulique selon la revendication 1, **caractérisé en ce que** les conduites pilotes (33, 34) sont raccordées directement à l'alimentation en pression pilote (20), de préférence par l'intermédiaire d'un agencement de vannes actionné par un aimant proportionnel ou tout ou rien.

12. Dispositif de commande électro-hydraulique selon la revendication 7, **caractérisé en ce que** la vanne anti-retour (51) est intégrée dans un corps à visser Ermeto et peut être déverrouillée, avec un rapport de commande situé entre environ 1 : 25 à 1 : 30 avec pré-décharge de déverrouillage, que le corps à visser Ermeto est vissé dans le cylindre hydraulique (8, 9), et qu'un flexible sous pression ou une conduite sous pression, en tant que conduite de travail (12, 13), est vissé sur le corps à visser Ermeto.
